# EUROPEAN PATENT SPECIFICATION

(11) **EP 4 266 395 B1**
(45) Date of publication and mention of the grant of the patent: **18.02.2026**
(21) Application number: 22766386.1
(22) Date of filing: 11.03.2022
(51) Int. Cl.: H01M 4/13, H01M 10/0525, H01M 50/536, H01M 4/66, H01M 4/70, H01M 10/052, H01M 50/533, H01M 50/534, H01M 10/0587

(54) **ELECTRODE SHEET AND APPLICATION THEREOF**
ELEKTRODENFOLIE UND ANWENDUNG DAVON
FEUILLE D'ÉLECTRODE ET SON APPLICATION

(30) Priority: 11.03.2021 CN 202110271076
(43) Date of publication of application: 25.10.2023
(73) Proprietor: Zhuhai CosMX Battery Co., Ltd., Zhuhai, Guangdong 519180 (CN)
(72) Inventor: ZHANG, Jian, Zhuhai, Guangdong 519180 (CN); ZHAI, Yanyun, Zhuhai, Guangdong 519180 (CN); PENG, Chong, Zhuhai, Guangdong 519180 (CN)
(74) Representative: Murgitroyd & Company
(86) International application number: PCT/CN2022/080363
(87) International publication number: WO 2022/188864

(56) References cited:
- EP-A1- 3 490 033
- WO-A1-2012/081368
- CN-A- 113 066 955
- CN-A- 113 097 439
- CN-A- 113 097 662
- CN-A- 113 241 423
- CN-A- 113 285 054
- CN-A- 113 285 055
- CN-U- 210 897 473
- CN-U- 210 897 473
- CN-Y- 2 872 606

## Description

### TECHNICAL FIELD

The present application pertains to the technical field of lithium-ion batteries, and specifically relates to an electrode plate and an application thereof.

### BACKGROUND

Since the first commercial lithium-ion battery was released by Sony in 1991, lithium-ion batteries have been widely used in fields such as consumer electronics, electric vehicles, and energy storage.

A conventional lithium-ion battery generally uses aluminum foil as a positive electrode current collector and copper foil as a negative electrode current collector. To improve energy density of the lithium-ion battery, aluminum foil or copper foil can be combined with a lighter polymer material to form a novel current collector, such as aluminum-polymer-aluminum current collector, and copper-polymer-copper current collector. The novel current collector with a sandwich structure not only has smaller surface density, but also can reduce weight of a lithium-ion battery and improve the energy density. Moreover, for the current collector with this structure, when a battery is short-circuited and temperature of the battery rises to a specific temperature, a polymer material is deformed, and then copper foil or aluminum foil falls off from the polymer, thereby cutting off current, and ensuring better safety than conventional copper foil and aluminum foil.

However, since the polymer material in the current collector with this structure is not conductive, and when a tab is welded to one side of the current collector, the other side of the current collector cannot be conducted, and thus a new welding method needs to be developed.

Patent document CN210897473U discloses an electrode plate, which includes a current collector, a tab assembly and an active material layer. The current collector includes an insulating layer, and a first conductive layer and a second conductive layer disposed on two surfaces of the insulating layer, respectively. The tab assembly includes a first tab and a second tab. The first tab includes a first current collector connection region and a first tab connection region, and the second tab includes a second current collector connection region, a second tab connection region and a second post connection region.

Patent document WO2012081368A1 discloses a non-aqueous secondary battery capable of suppressing the degradation of battery performance while improving its safety. This lithium-ion rechargeable battery (non-aqueous secondary battery) includes: a positive electrode including a positive-electrode current collector, which has a multilayer structure whereby a conductive layer is formed on both surfaces of a resin layer, and a positive-electrode active material layer that is formed on the positive-electrode current collector; a penetrating member containing a conductive material and penetrating the positive-electrode current collector in the thickness direction; and an electrode tab electrically connected to the positive electrode.

Patent document EP3490033A1 discloses an electrode member, which includes an electrode body. The electrode body includes an insulating base and a conductive layer disposed on a surface of the insulating base. The conductive layer has a first portion and a second portion extending from the first portion, the first portion is adapted to be coated with an active material and the second portion is uncoated with the active material. A portion of the insulating base corresponding to the second portion is provided with a first through-hole throughout a thickness direction.

### SUMMARY

The present application provides an electrode plate, and the electrode plate may conduct two surfaces of a current collector, and may improve energy density of a lithium-ion battery.

The present application provides an electrochemical apparatus and the electrochemical apparatus has a high energy density.

The present application provides an electrode plate, where the electrode plate includes a current collector, an active layer, and a tab being formed of one single piece. A first function surface of the current collector includes a first active layer region and a first tab region, a second function surface of the current collector includes a second active layer region corresponding to the first active layer region and a second tab region corresponding to the first tab region, and the active layer is disposed in the first active layer region and/or the second active layer region.

The first tab region is provided with N through holes penetrating to the second tab region, the tab passes through the through hole to conduct the first function surface and the second function surface of the current collector, and a first section of the tab is connected to the first tab region to form a first connection region and a second section of the tab is connected to the second tab region to form a second connection region, where N ≥ 1. The first connection region is a position where the tab and the first tab region are fixed, and the second connection region is a position where the tab and the second tab region are fixed.

According to the electrode plate described above, the tab further includes a third section, and the third section extends from a function surface of the current collector and is connected to an external tab.

According to the electrode plate described above, in a width direction of the current collector, a minimum distance between edges of M through holes and an edge of the current collector is W1, where W1 ≥ 1 mm, and M ≤ N.

According to the electrode plate described above, in the width direction of the current collector, a ratio of the minimum distance W1 between the edges of the M through holes and the edge of the current collector to a width WO of the first tab region and/or the second tab region is (0.2-0.8):1.

According to the electrode plate described above, WO ranges from 10 mm to 100 mm.

According to the electrode plate described above, in a length direction of the current collector, a minimum distance between edges of M through holes and an edge of the first active layer region and/or the second active layer region is L1, where L1 ≥ 2 mm.

According to the electrode plate described above, a width of the first tab region and/or the second tab region is WO, and in a width direction of the current collector, a width of the first connection region and/or the second connection region ranges from 1 mm to ((WO/2)-2) mm.

According to the electrode plate described above, in a width direction of the current collector, a minimum distance between an edge of the first connection region and/or the second connection region and edges of M through holes is greater than or equal to 1 mm; and/or
in a width direction of the current collector, a minimum distance between an edge of the first connection region and/or the second connection region and an edge of the current collector is greater than or equal to 1 mm.

According to the electrode plate described above, a protective layer is disposed on the first function surface and/or the second function surface, the protective layer covers each of W through holes, and the protective layer has openings at corresponding positions of the W through holes, where W ≤ N.

According to the electrode plate described above, a thickness of the protective layer ranges from 0.5 µm to 50 µm.

According to the electrode plate described above, an area of the protective layer is 1.2-5 times an area of the W through holes.

According to the electrode plate described above, the current collector includes a first conductive layer, an insulation layer, and a second conductive layer that are stacked.

The first function surface is a surface, away from the insulation layer, of the first conductive layer, and the second function surface is a surface, away from the insulation layer, of the second conductive layer.

According to the electrode plate described above, the current collector further comprises a transition layer disposed between the first conductive layer and the insulation layer and/or between the second conductive layer and the insulation layer.

According to the electrode plate described above, the first tab region is disposed on a side in a length direction of the first active layer region; or, the first tab region is disposed on a side in a width direction of the first active layer region, and three sides of the first tab region are adjacent to the first active layer region; or, the first tab region is disposed on a side in a width direction of the first active layer region, and one side of the first tab region is adjacent to the first active layer region.

The present application further provides an electrochemical apparatus, including the foregoing electrode plate.

The electrode plate provided in the present application includes a current collector, an active layer, and a tab. A first function surface of the current collector includes a first active layer region and a first tab region, a second function surface of the current collector includes a second active layer region corresponding to the first active layer region and a second tab region corresponding to the first tab region, and the active layer is disposed in the first active layer region and/or the second active layer region. The first tab region is provided with N through holes penetrating to the second tab region, the tab passes through the through hole, and a first section of the tab is connected to the first tab region to form a first connection region and a second section of the tab is connected to the second tab region to form a second connection region, where N ≥ 1. In the present application, a first tab region is provided with a through hole penetrating to a second tab region, a tab passes through the through hole, and two ends of a tab are respectively connected to the first tab region and the second tab region, so that two sides of a current collector may be conducted, thereby improving energy density of a lithium-ion battery.

### BRIEF DESCRIPTION OF THE DRAWINGS

FIG. 1 is a top view of a current collector in the present application.
FIG. 2 is a top view of an electrode plate in a first implementation of the present application.
FIG. 3 is a first cross-sectional view taken along the line X-X in FIG. 2 of the present application.
FIG. 4 is a second cross-sectional view taken along the line X-X in FIG. 2 of the present application.
FIG. 5 is a top view of an electrode plate in a second implementation of the present application.
FIG. 6 is a top view of an electrode plate in a third implementation of the present application.
FIG. 7 is a cross-sectional view taken along the line X-X in FIG. 5 or FIG. 6 of the present application.
FIG. 8 is a top view of an electrode plate in a fourth implementation of the present application.
FIG. 9 is a first cross-sectional view taken along the line X-X in FIG. 8 of the present application.
FIG. 10 is a second cross-sectional view taken along the line X-X in FIG. 8 of the present application.
FIG. 11 is a schematic structural diagram of a jelly roll in Examples 1, 4, and 5 of the present application.
FIG. 12 is a schematic structural diagram of a jelly roll in Example 2 of the present application.
FIG. 13 is a schematic structural diagram of a jelly roll in Example 3 of the present application.

### Reference numerals:

1. tab;
2. first active layer region;
3. first tab region;
4. through hole;
5. first connection region;
6. second tab region;
7. second connection region;
8. second active layer region; and
9. protective layer.

### DETAILED DESCRIPTIONS OF THE EMBODIMENTS

The following clearly and completely describes the technical solutions in the embodiments of the present application with reference to the accompanying drawings in the embodiments of the present application. Apparently, the described embodiments are some but not all of the embodiments of the present application. All other embodiments obtained by a person of ordinary skill in the art based on the embodiments of the present application without creative efforts shall fall within the protection scope of the present application.

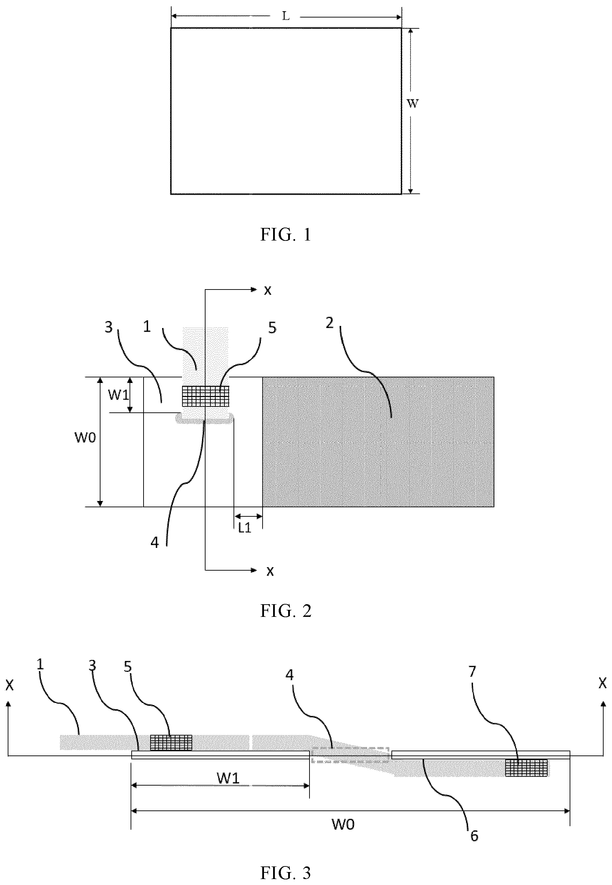

FIG. 1 is a top view of a current collector in the present application. As shown in FIG. 1, for all definitions of "length" and "width" described below, reference may be made to a "length direction L" and a "width direction W" of the current collector. For example, either or both of a first function surface and a second function surface (the first function surface and the second function surface refer to two largest and opposite surfaces, for an electrode active layer to be coated, of the current collector) of the current collector are rectangles. The length direction L of the current collector is a direction in which the largest side length of a function surface of the current collector is located, and the width direction W of the current collector is a direction in which the smallest side length of a function surface of the current collector is located. For example, when a width of a first tab region and/or a second tab region is defined as W0 in the present application, a size of the first tab region and/or the second tab region is W0 in a width direction of the current collector.

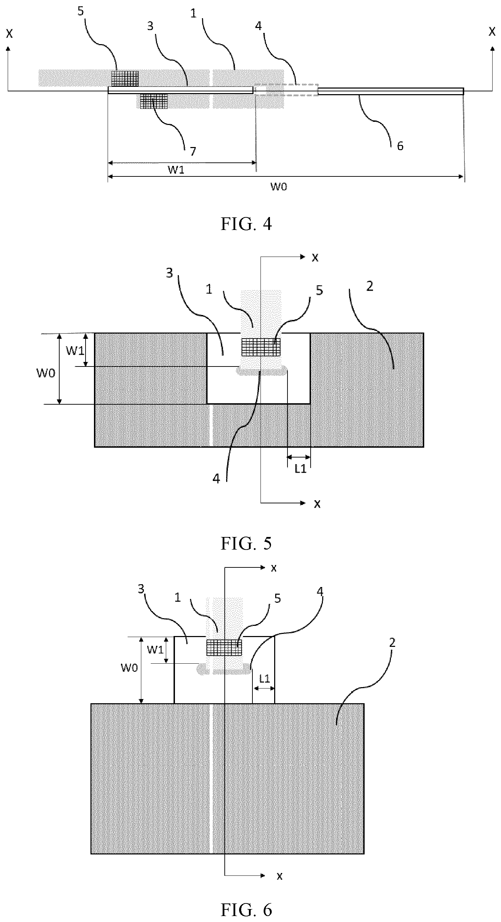

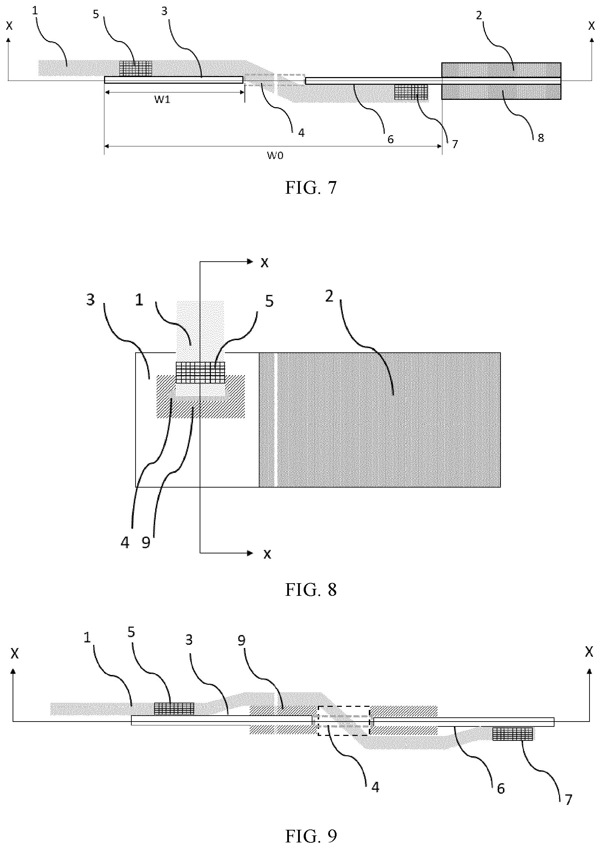

FIG. 2 is a top view of an electrode plate in a first implementation of the present application. FIG. 3 is a first cross-sectional view taken along the line X-X in FIG. 2 of the present application. FIG. 4 is a second cross-sectional view taken along the line X-X in FIG. 2 of the present application. FIG. 5 is a top view of an electrode plate in a second implementation of the present application. FIG. 6 is a top view of an electrode plate in a third implementation of the present application. FIG. 7 is a cross-sectional view taken along the line X-X in FIG. 5 or FIG. 6 of the present application. As shown in FIG. 2 to FIG. 7, the present application provides an electrode plate including a current collector, an active layer, and a tab 1. A first function surface of the current collector includes a first active layer region 2 and a first tab region 3, a second function surface of the current collector includes a second active layer region 8 corresponding to the first active layer region 2 and a second tab region 6 corresponding to the first tab region 3, and the active layer is disposed in the first active layer region 2 and/or the second active layer region 8.

The first tab region 3 is provided with N through holes 4 penetrating to the second tab region 6, the tab 1 passes through a through hole 4, and a first section of the tab 1 is connected to the first tab region 3 to form a first connection region 5 and a second section of the tab 1 is connected to the second tab region 6 to form a second connection region 7, where N ≥ 1.

Specific positions of the first tab region 3 and the first active layer region 2 are not limited in the present application. As shown in FIG. 2, the first tab region 3 in the present application may be disposed on a side in a length direction of the first active layer region 2. As shown in FIG. 5, the first tab region 3 in the present application may alternatively be disposed on a side in a width direction of the first active layer region 2, and three sides of the first tab region 3 are adjacent to the first active layer region 2. As shown in FIG. 6, the first tab region 3 in the present application may alternatively be disposed on a side in a width direction of the first active layer region 2, and one side of the first tab region 3 is adjacent to the first active layer region 2.

In the present application, the second tab region 6 corresponds to the first tab region 3, and the second active layer region 8 corresponds to the first active layer region 2. It may be understood that a projection of the second tab region 6 on the first tab region 3 coincides fully with the first tab region 3, and a projection of the second active layer region 8 on the first active layer region 2 coincides fully with the first active layer region 2. The active layer in the present application may be disposed at the first active layer region 2, may be disposed at the second active layer region 8, or may be disposed at both the first active layer region 2 and the second active layer region 8.

In the present application, the first tab region 3 is provided with N through holes 4 penetrating to the second tab region 6, and the tab 1 passes through a through hole 4. It may be understood that the electrode plate in the present application may have n tabs 1, where n ≤ N. When n is equal to N, each tab 1 passes through one through hole 4, a first section of each tab 1 is connected to the first tab region 3 to form a first connection region 5, and a second section of each tab 1 is connected to the second tab region 6 to form a second connection region 7. When n < N, each tab 1 passes through one through hole 4, a first section of each tab 1 is connected to the first tab region 3 to form a first connection region 5, a second section of each tab 1 is connected to the second tab region 6 to form a second connection region 7, and a remaining through hole 4 is reserved.

In the present application, the tab 1 further includes a third section, and the third section extends from a function surface of the current collector and is configured to be connected to an external tab.

A shape of the through hole 4 is not limited in the present application, and any shape of a through hole through which the tab 1 may pass is within the protection scope of the present application. In some implementations, the shape of the through hole 4 may be rectangular, circular, polyhedral, or rectangular + semicircular. In a specific implementation, the shape of the through hole 4 is rectangular + semicircular.

In the present application, the first connection region 5 refers to a position where the tab 1 and the first tab region 3 are fixed, and the second connection region 7 refers to a position where the tab 1 and the second tab region 6 are fixed. If the tab 1 is welded to the first tab region 3 and the second tab region 6 separately, the first connection region 5 is a region in which a solder joint formed when the tab 1 is welded to the first tab region 3 is located, and the second connection region 7 is a region in which a solder joint formed when the tab 1 is welded to the second tab region 6 is located.

Specific positions of the first connection region 5 and the second connection region 7 are not limited in the present application. As shown in FIG. 3, the first connection region 5 and the second connection region 7 may be located on two sides of the through hole 4, respectively. As shown in FIG. 4, the first connection region 5 and the second connection region 7 may be located on a same side of the through hole 4.

A specific structure of the current collector is not limited in the present application. In a specific implementation, the current collector includes a first conductive layer, an insulation layer, and a second conductive layer that are stacked; and the first function surface is the first conductive layer and the second function surface is the second conductive layer. For a current collector with such a structure, when a battery is short-circuited, and when a temperature of the battery rises to a specific value, the insulation layer may swell, so that the first conductive layer and the second conductive layer fall off from the insulation layer, internal current of the battery is cut off, and safety of the battery is improved.

A material of the first conductive layer or the second conductive layer may be a metal or an alloy, which includes, but is not limited to, at least one of aluminum, copper, nickel, silver, gold, or iron. The materials of the first conductive layer and the second conductive layer may be the same or different.

A material of the insulation layer may be a polymer including, but not limited to, at least one of Polyethylene terephthalate (PET), Polypropylene (PP), Polyethylene (PE), Polyimide (PI), Polyether ketone (PEK), or Polyphenylene sulfide (PPS).

A transition layer may be further included between the first conductive layer and the insulation layer and/or between the second conductive layer and the insulation layer, and a material of the transition layer includes, but is not limited to, at least one of aluminum oxide, magnesium oxide, or titanium oxide.

The first conductive layer, the second conductive layer, or the insulation layer may further be provided with a through hole. A specific shape of the through hole is not limited in the present application. The shape of the through hole may be rectangular, circular, polyhedral, or rectangular + semicircular. In a specific implementation, the shape of the through hole is rectangular + semicircular.

The electrode plate in the present application may be a positive electrode plate or may be a negative electrode plate.

When the electrode plate is a positive electrode plate, the active layer in the present application is a positive electrode active layer disposed on a surface of a positive electrode current collector. The positive electrode active layer is obtained by drying a positive electrode active slurry, and the positive electrode active slurry includes a positive electrode active material, a conductive agent, and a binder. The positive electrode active material includes at least one of Lithium Cobalt Oxide (LCO), Nickel Cobalt Manganese ternary material (NCM), Nickel Cobalt Aluminum ternary material (NCA), Nickel Cobalt Manganese Aluminum quaternary material (NCMA), Lithium Ferrous Phosphate (LFP), Lithium Manganese Phosphate (LMP), Lithium Vanadium Phosphate (LVP), Lithium Manganate Oxide (LMO), or a lithium-rich manganese-base material.

When the electrode plate is a negative electrode plate, the active layer in the present application is a negative electrode active layer disposed on a surface of a negative electrode current collector. The negative electrode active layer is obtained by drying a negative electrode active slurry, and the negative electrode active slurry includes a negative electrode active material, a conductive agent, and a binder. The negative electrode active material includes at least one of graphite, mesocarbon microbead, soft carbon, hard carbon, a silicon material, a silicon oxide material, a silicon carbon material, or lithium titanate.

The conductive agent in the positive electrode active slurry and the negative electrode active slurry includes at least one of conductive carbon black, carbon nanotubes, conductive graphite, or graphene.

The binder in the positive electrode active slurry and the negative electrode active slurry includes at least one of polyvinylidene fluoride, a copolymer of vinylidene fluoride-hexafluoropropylene, polyamide, polyacrylonitrile, polyacrylic acid ester, polyacrylic acid, polyacrylate, sodium carboxymethyl cellulose, polyvinylpyrrolidone, polyvinyl ether, polymethyl methacrylate, polytetrafluoroethylene, polyhexafluoropropylene, or styrene-butadiene rubber.

In the present application, the through hole 4 penetrating through the first tab region 3 and the second tab region 6 is provided, the tab 1 passes through the through hole 4, the first section of the tab 1 is connected to the first tab region 3, and the second section of the tab 1 is connected to the second tab region 6, so that two sides of the current collector may be conducted, thereby improving energy density of a lithium-ion battery.

As shown in FIG. 2 to FIG. 7, in some implementations of the present application, in a width direction of the current collector, a minimum distance between edges of M through holes 4 and an edge of the current collector is W1, where W1 ≥ 1 mm, and M ≤ N.

In the present application, the minimum distance between edges of the through holes 4 and an edge of the current collector means a distance between an edge of the closest through hole and the edge of the current collector. It may be understood that, in the present application, a minimum distance between edges of at least M through holes 4 and the edge of the current collector is W1, where W1 ≥ 1 mm. A specific distance is reserved between the edges of the through holes 4 and the current collector, so that service life of the electrode plate may be prolonged.

As shown in FIG. 2 to FIG. 7, in some implementations of the present application, in the width direction of the current collector, a ratio of the minimum distance W1 between the edges of the M through holes 4 and the edge of the current collector to a width WO of the first tab region 3 and/or the second tab region 6 is (0.2-0.8): 1.

In the present application, if the ratio of W1 to WO is too large, it means that an area of a through hole 4 is too small to be passed through by the tab 1. If the ratio of W1 to WO is too small, it means that an area of a through hole 4 is too large, the electrode plate is easily damaged during long-term use, and service life is short. The ratio of W1 to WO is defined as (0.2-0.8): 1 in the present application, so that the tab 1 may be allowed to pass through the through hole 4 normally while ensuring the service life of the electrode plate. In a specific implementation, WO ranges from 10 mm to 100 mm.

As shown in FIG. 2 to FIG. 7, in some implementations of the present application, in a length direction of the current collector, a minimum distance between the edges of the M through holes 4 and an edge of the first active layer region 2 and/or the second active layer region 8 is L1, where L1 ≥ 2 mm. With this arrangement, the service life of the electrode plate may be prolonged.

In some implementations of the present application, in the width direction of the current collector, a width of the first connection region 5 and/or the second connection region 7 ranges from 1 mm to ((WO/2)-2) mm.

In the present application, when the width of the first connection region 5 and/or the second connection region 7 is too large, the energy density of the electrode plate is reduced. When the width of the first connection region 5 and/or the second connection region 7 is too small, the service life of the electrode plate is short. In the present application, the width of the first connection region 5 and/or the second connection region 7 is defined as ranging from 1 mm to ((WO/2)-2) mm, so that the service life of the electrode plate may be prolonged while ensuring the energy density of the electrode plate.

In some implementations of the present application, in the width direction of the current collector, a minimum distance between an edge of the first connection region 5 and/or the second connection region 7 and the edges of the M through holes 4 is greater than or equal to 1 mm; and/or
in the width direction of the current collector, a minimum distance between an edge of the first connection region 5 and/or the second connection region 7 and the edge of the current collector is greater than or equal to 1 mm. With this arrangement, the service life of the electrode plate may be prolonged.

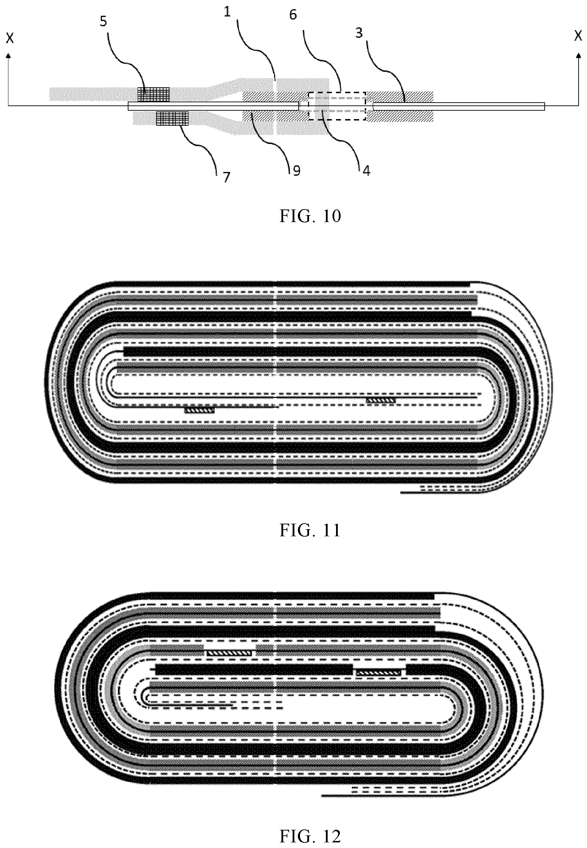

FIG. 8 is a top view of an electrode plate in a fourth implementation of the present application. FIG. 9 is a first cross-sectional view taken along the line X-X in FIG. 8 of the present application. FIG. 10 is a second cross-sectional view taken along the line X-X in FIG. 8 of the present application. As shown in FIG. 8 to FIG. 10, in some implementations of the present application, in order to protect a through hole 4 and prevent the through hole 4 from cracking, and improve the service life of the electrode plate, a protective layer 9 is disposed on the first function surface and/or the second function surface, the protective layer 9 covers each of the W through holes 4, and the protective layer 9 has openings at corresponding positions of the W through holes 4, where W ≤ N.

A specific type of the protective layer 9 is not limited in the present application, and the protective layer 9 may be an insulating material or a conductive material. In a specific implementation, the protective layer 9 may be a protective adhesive paper or ceramic layer. The corresponding positions of the W through holes 4 refer to positions of projections of the W through holes 4 on the protective layer 9. It may be understood that the protective layer 9 has an opening at a through hole 4, and a size and a shape of the opening of the protective layer 9 may be the same as or different from those of the through hole 4.

In some implementations of the present application, a thickness of the protective layer 9 ranges from 0.5 µm to 50 µm.

In the present application, if the thickness of the protective layer 9 is too thick, the energy density of the electrode plate is reduced; if the thickness of the protective layer 9 is too thin, the service life of the electrode plate is short since the through hole 4 cannot be sufficiently protected. The thickness of the protective layer 9 is defined as ranging from 0.5 µm to 50 µm in the present application, which not only protects the through holes 4 and increases the service life of the electrode plate, but also does not reduce the energy density of the electrode plate.

In some implementations of the present application, an area of the protective layer 9 is 1.2-5 times an area of the W through holes 4.

In the present application, if the area of the protective layer 9 (including an area of an opening of the protective layer 9) is too large, the energy density of the electrode plate is reduced, and connection of the tab 1 with the first tab region 3 and/or the second tab region 6 is adversely affected. If the area of the protective layer 9 is too small, the service life of the electrode plate is short since the through holes 4 cannot be sufficiently protected. The area of the protective layer 9 is defined as 1.2-5 times the area of the through holes 4 in the present application, so that the energy density of the electrode plate may be ensured, the tab 1 may be normally connected to the first tab region 3 and/or the second tab region 6, and the through holes 4 may also be protected, so as to improve the service life of the electrode plate.

A second aspect of the present application provides an electrochemical apparatus, including the foregoing electrode plate and further including an outer package and an electrolyte.

The outer package may be an aluminum-plastic film, and the electrolyte may include a lithium salt and a non-aqueous solvent. The lithium salt is not specifically limited in the present application, and any lithium salt known in the art may be used provided that the purpose of the present application can be achieved. For example, the lithium salt may include at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, or LiPO₂F₂. In the present application, the non-aqueous solvent is not particularly limited, provided that the purpose of the present application can be achieved. For example, the non-aqueous solvent may include at least one of a carbonate compound, a carboxylate compound, an ether compound, a nitrile compound, or another organic solvent.

The electrochemical apparatus in the present application includes the foregoing electrode plate, so that the electrochemical apparatus may have high energy density.

Hereinafter, the technical solutions of the present application will be further described in combination with specific embodiments. All parts, percentages of, and ratios recorded in the following embodiments are based on masses, all reagents used in the embodiments are commercially available or synthesized in a conventional manner, and may be used directly without further treatment, and all instruments used in the embodiments are commercially available.

### Example 1

A lithium-ion battery in this example is obtained according to the following steps.

### (1) Preparation of a positive electrode plate

A positive electrode current collector is a current collector of an Al-PET-Al structure. As shown in FIG. 8 and FIG. 9, the positive electrode current collector includes a first tab region 3 and a first active layer region 2 in a length direction, a second tab region 6 is disposed in correspondence with the first tab region 3, and a second active layer region 8 is disposed in correspondence with the first active layer region 2. The first tab region 3 is provided with a through hole 4 penetrating to the second tab region 6, and a shape of the through hole 4 is rectangular + semicircular.

A lithium cobalt oxide active slurry is applied to the first active layer region 2 and the second active layer region 8; a protective layer 9 is provided in the first tab region 3 and the second tab region 6, and the protective layer 9 is a protective adhesive paper; and then an opening is formed on the protective adhesive paper at the through hole 4, and a shape of the opening is rectangular + semicircular. A mass composition of the lithium cobalt oxide active slurry is as follows: lithium cobalt oxide: conductive carbon black: conductive carbon tube: Polyvinylidene fluoride (PVDF) = 97%: 1%: 0.5%: 1.5%. A thickness of the protective adhesive paper is 12 µm, and a ratio of an area of the opening of the adhesive paper to an area of the through hole 4 is 1: 1.

A tab 1 made of Al is inserted into the through hole 4, a first section of the tab 1 is welded to the first tab region 3 to form a first connection region 5, and a second section of the tab 1 is welded to the second tab region 6 to form a second connection region 7. The first connection region 5 and the second connection region 7 are located on two sides of the through hole 4. In this way, the positive electrode plate is obtained. A width of the first connection region 5 and/or the second connection region 7 is 35 mm.

### (2) Preparation of a negative electrode plate

A negative electrode current collector is Cu foil. A graphite active slurry is applied to two surfaces of the negative electrode current collector, and a tab is welded to an area where the graphite active slurry is not applied. In this way, the negative electrode plate is obtained.

A mass composition of the graphite active slurry is as follows: graphite: conductive carbon black: styrene-butadiene rubber: sodium carboxymethyl cellulose = 96%: 1.5%: 1.5%: 1%.

### (3) Preparation of a lithium-ion battery

FIG. 11 is a schematic structural diagram of a jelly roll in Examples 1, 4, and 5 of the present application. As shown in FIG. 11, the positive electrode plate in step (1), the negative electrode plate in step (2), and a separator are wound to obtain the jelly roll; and the lithium-ion battery is obtained after processes of packaging, electrolyte injection, formation, secondary sealing, and grading.

### Example 2

A lithium-ion battery in this example is obtained according to the following steps.

### (1) Preparation of a positive electrode plate

A positive electrode current collector is a current collector of an Al-Al₂O₃-PET-Al₂O₃-Al structure. As shown in FIG. 5 and FIG. 7, the positive electrode current collector includes a first tab region 3 and a first active layer region 2 in a width direction, and three sides of the first tab region 3 are adjacent to the first active layer region 2. A second tab region 6 is disposed in correspondence with the first tab region 3, a second active layer region 8 is disposed in correspondence with the first active layer region 2, the first tab region 3 is provided with a through hole 4 penetrating to the second tab region 6, and a shape of the through hole 4 is rectangular + semicircular.

A lithium cobalt oxide active slurry is applied to the first active layer region 2 and the second active layer region 8, and a mass composition of the lithium cobalt oxide active slurry is as follows: lithium cobalt oxide: conductive carbon black: conductive carbon tube: PVDF = 97%: 1%: 0.5%: 1.5%.

A tab 1 made of Al is inserted into the through hole 4, a first section of the tab 1 is welded to the first tab region 3 to form a first connection region 5, and a second section of the tab 1 is welded to the second tab region 6 to form a second connection region 7. The first connection region 5 and the second connection region 7 are located on two sides of the through hole 4. In this way, the positive electrode plate is obtained. A width of the first connection region 5 and/or the second connection region 7 is 8 mm.

### (2) Preparation of a negative electrode plate

A negative electrode current collector is Cu foil. A graphite active slurry is applied to two surfaces of the negative electrode current collector, and a nickel tab is welded to either surface of the negative electrode current collector by ultrasonic welding in an area where the graphite active slurry is not applied. In this way, the negative electrode plate is obtained.

A mass composition of the graphite active slurry is as follows: graphite: conductive carbon black: styrene-butadiene rubber: sodium carboxymethyl cellulose = 96%: 1.5%: 1.5%: 1%.

### (3) Preparation of a lithium-ion battery

FIG. 12 is a schematic structural diagram of a jelly roll of Example 2 of the present application. As shown in FIG. 12, the positive electrode plate in step (1), the negative electrode plate in step (2), and a separator are wound to obtain the jelly roll; and the lithium-ion battery is obtained after processes of packaging, electrolyte injection, formation, secondary sealing, and grading.

### Example 3

A lithium-ion battery in this example is obtained according to the following steps.

### (1) Preparation of a positive electrode plate

A positive electrode current collector is a current collector of an Al-PP-Al structure. As shown in FIG. 6 and FIG. 7, the positive electrode current collector includes a first tab region 3 and a first active layer region 2 in a width direction, and one side of the first tab region 3 is adjacent to the first active layer region 2. A second tab region 6 is disposed in correspondence with the first tab region 3, a second active layer region 8 is disposed in correspondence with the first active layer region 2, the first tab region 3 is provided with a through hole 4 penetrating to the second tab region 6, and a shape of the through hole 4 is rectangular + semicircular.

A lithium cobalt oxide active slurry is applied to the first active layer region 2 and the second active layer region 8, and a mass composition of the lithium cobalt oxide active slurry is as follows: lithium cobalt oxide: conductive carbon black: conductive carbon tube: PVDF = 97%: 1%: 0.5%: 1.5%.

A tab 1 made of Al is inserted into the through hole 4, a first section of the tab 1 is welded to the first tab region 3 to form a first connection region 5, and a second section of the tab 1 is welded to the second tab region 6 to form a second connection region 7. The first connection region 5 and the second connection region 7 are located on two sides of the through hole 4. In this way, the positive electrode plate is obtained. A width of the first connection region 5 and/or the second connection region 7 is 3 mm.

### (2) Preparation of a negative electrode plate

A negative electrode current collector is Cu foil. A graphite active slurry is applied to two surfaces of the negative electrode current collector, and a tab is welded to an area where the graphite active slurry is not applied. In this way, the negative electrode plate is obtained.

A mass composition of the graphite active slurry is as follows: graphite: conductive carbon black: styrene-butadiene rubber: sodium carboxymethyl cellulose = 96%: 1.5%: 1.5%: 1%.

### (3) Preparation of a lithium-ion battery

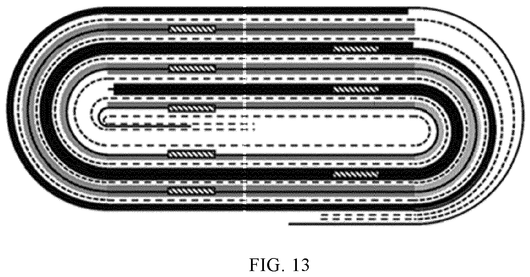

FIG. 13 is a schematic structural diagram of a jelly roll in Example 3 of the present application. As shown in FIG. 13, the positive electrode plate in step (1), the negative electrode plate in step (2), and a separator are wound to obtain the jelly roll; and the lithium-ion battery is obtained after processes of packaging, electrolyte injection, formation, secondary sealing, and grading.

### Example 4

A lithium-ion battery in this example is obtained according to the following steps.

### (1) Preparation of a positive electrode plate

A positive electrode current collector is Al foil. A lithium cobalt oxide active slurry is applied to two surfaces of the positive electrode current collector, and an aluminum tab is welded to either surface of the positive electrode current collector by ultrasonic welding in an area where the lithium cobalt oxide active slurry is not applied. In this way, the positive electrode plate is obtained.

A mass composition of the lithium cobalt oxide active slurry is as follows: lithium cobalt oxide: conductive carbon black: conductive carbon tube: PVDF = 97%: 1%: 0.5%: 1.5%.

### (2) Preparation of a negative electrode plate

A negative electrode current collector is a current collector of a Cu-PET-Cu structure. As shown in FIG. 8 and FIG. 9, the negative electrode current collector includes a first tab region 3 and a first active layer region 2 in a length direction, a second tab region 6 is disposed in correspondence with the first tab region 3, and a second active layer region 8 is disposed in correspondence with the first active layer region 2. The first tab region 3 is provided with a through hole 4 penetrating to the second tab region 6, and a shape of the through hole 4 is rectangular + semicircular.

A graphite active slurry is applied to the first active layer region 2 and the second active layer region 8; a protective layer 9 is provided in the first tab region 3 and the second tab region 6, and the protective layer 9 is a protective adhesive paper; and then an opening is formed on the protective adhesive paper at the through hole 4, and a shape of the opening is rectangular + semicircular. A mass composition of the negative active slurry is as follows: graphite: conductive carbon black: styrene-butadiene rubber: sodium carboxymethyl cellulose = 96%: 1.5%: 1.5%: 1%. A thickness of the protective adhesive paper is 12 µm, and a ratio of an area of the opening of the adhesive paper to an area of the through hole 4 is 1: 1.

A tab 1 made of Ni is inserted into the through hole 4, a first section of the tab 1 is welded to the first tab region 3 to form a first connection region 5, and a second section of the tab 1 is welded to the second tab region 6 to form a second connection region 7. The first connection region 5 and the second connection region 7 are located on two sides of the through hole 4. In this way, the negative electrode plate is obtained. A width of the first connection region 5 and/or the second connection region 7 is 35 mm.

### (3) Preparation of a lithium-ion battery

As shown in FIG. 11, the positive electrode plate in step (1), the negative electrode plate in step (2), and a separator are wound to obtain a jelly roll; and the lithium-ion battery is obtained after processes of packaging, electrolyte injection, formation, secondary sealing, and grading.

### Example 5

A lithium-ion battery in this example is obtained according to the following steps.

### (1) Preparation of a positive electrode plate

A positive electrode current collector is a current collector of an Al-PET-Al structure. As shown in FIG. 8 and FIG. 9, the positive electrode current collector includes a first tab region 3 and a first active layer region 2 in a length direction, a second tab region 6 is disposed in correspondence with the first tab region 3, and a second active layer region 8 is disposed in correspondence with the first active layer region 2. The first tab region 3 is provided with a through hole 4 penetrating to the second tab region 6, and a shape of the through hole 4 is rectangular + semicircular.

A lithium cobalt oxide active slurry is applied to the first active layer region 2 and the second active layer region 8; a protective layer 9 is provided in the first tab region 3 and the second tab region 6, and the protective layer 9 is a protective adhesive paper; and then an opening is formed on the protective adhesive paper at the through hole 4, and a shape of the opening is rectangular + semicircular. A mass composition of the lithium cobalt oxide active slurry is as follows: lithium cobalt oxide: conductive carbon black: conductive carbon tube: PVDF = 97%: 1%: 0.5%: 1.5%. A thickness of the protective adhesive paper is 12 µm, and a ratio of an area of the opening of the adhesive paper to an area of the through hole 4 is 1:1.

A tab 1 made of Al is inserted into the through hole 4, a first section of the tab 1 is welded to the first tab region 3 to form a first connection region 5, and a second section of the tab 1 is welded to the second tab region 6 to form a second connection region 7. The first connection region 5 and the second connection region 7 are located on two sides of the through hole 4. In this way, the positive electrode plate is obtained. A width of the first connection region 5 and/or the second connection region 7 is 35 mm.

### (2) Preparation of a negative electrode plate

A negative electrode current collector is a current collector of a Cu-PET-Cu structure. As shown in FIG. 8 and FIG. 9, the negative electrode current collector includes a first tab region 3 and a first active layer region 2 in a length direction, a second tab region 6 is disposed in correspondence with the first tab region 3, and a second active layer region 8 is disposed in correspondence with the first active layer region 2. The first tab region 3 is provided with a through hole 4 penetrating to the second tab region 6, and a shape of the through hole 4 is rectangular + semicircular.

A graphite active slurry is applied to the first active layer region 2 and the second active layer region 8. A protective adhesive paper 9 is attached to the first tab region 3 and the second tab region 6, an opening is formed on the protective adhesive paper 9 at the through hole 4, and a shape of the opening is rectangular + semicircular. A mass composition of the negative active slurry is as follows: graphite: conductive carbon black: styrene-butadiene rubber: sodium carboxymethyl cellulose = 96%: 1.5%: 1.5%: 1%. A thickness of the protective adhesive paper is 12 µm, and a ratio of an area of the opening of the adhesive paper to an area of the through hole 4 is 1:1.

A tab 1 made of Ni is inserted into the through hole 4, a first section of the tab 1 is welded to the first tab region 3 to form a first connection region 5, and a second section of the tab 1 is welded to the second tab region 6 to form a second connection region 7. The first connection region 5 and the second connection region 7 are located on two sides of the through hole 4. In this way, the negative electrode plate is obtained. A width of the first connection region 5 and/or the second connection region 7 is 35 mm.

### (3) Preparation of a lithium-ion battery

As shown in FIG. 11, the positive electrode plate in step (1), the negative electrode plate in step (2), and a separator are wound to obtain a jelly roll; and the lithium-ion battery is obtained after processes of packaging, electrolyte injection, formation, secondary sealing, and grading.

### Comparative Example 1

A lithium-ion battery in this comparative example is obtained according to the following steps.

A positive electrode current collector is Al foil. A lithium cobalt oxide active slurry is applied to two surfaces of the positive electrode current collector, and a tab is welded to an area where the lithium cobalt oxide active slurry is not applied. In this way, a positive electrode plate is obtained.

A negative electrode current collector is Cu foil. A graphite active slurry is applied to two surfaces of the negative electrode current collector, and a tab is welded to an area where the graphite active slurry is not applied. In this way, a negative electrode plate is obtained.

A mass composition of the lithium cobalt oxide active slurry is as follows: lithium cobalt oxide: conductive carbon black: conductive carbon tube: PVDF = 97%: 1%: 0.5%: 1.5%. A mass composition of the graphite active slurry is as follows: graphite: conductive carbon black: styrene-butadiene rubber: sodium carboxymethyl cellulose = 96%: 1.5%: 1.5%: 1%.

The positive electrode plate, the negative electrode plate, and a separator are wound to obtain a jelly roll; and the lithium-ion battery is obtained after processes of packaging, electrolyte injection, formation, secondary sealing, and grading.

### Performance test

### (1) Heavy impact test

A lithium-ion battery is fully charged, and the lithium-ion battery is placed on a plane; a steel column with a diameter of 15.8±0.2 mm is placed in the center of the lithium-ion battery, with the longitudinal axis of the steel column parallel to the plane; and a heavy object with a weight of 9.1±0.1 kg falls freely from a height of 610 ±25 mm onto the steel column above the lithium-ion battery. 20 lithium-ion batteries obtained from a same example or comparative example are tested in parallel to calculate a heavy impact pass rate of the lithium-ion battery. Test results are shown in Table 1.

### (2) Energy density

A lithium-ion battery is fully charged at 0.2C, and then discharged to 3.0V at 0.2C. The discharge energy E is recorded, and a mass of the battery is measured by using an electronic balance, denoted as m. Battery energy density ED = E/m.

**Table 1 Performance test results of batteries in the Examples and Comparative Examples**

| Item | Energy density (Wh/kg) | Heavy impact (pass/test) |
|---|---|---|
| Example 1 | 292 | 20/20 |
| Example 2 | 300 | 20/20 |
| Example 3 | 286 | 20/20 |
| Example 4 | 295 | 4/20 |
| Example 5 | 310 | 20/20 |
| Comparative Example 1 | 280 | 0/20 |

It may be learned from Table 1 that, the energy density of the lithium-ion batteries in Examples 1-5 of the present application is greater than that of the lithium-ion battery in Comparative Example 1, and heavy impact performance of the lithium-ion batteries in Examples 1-5 of the present application is superior to that of the lithium-ion battery in Comparative Example 1. Therefore, the lithium-ion batteries in the examples of the present application not only have high energy density, but also have good safety performance.

The embodiments in this specification are described in a related manner, the same or similar parts between the embodiments may refer to each other, and each embodiment focuses on differences from other embodiments.

The foregoing descriptions are merely preferred embodiments of the present application, rather than limiting the protection scope of the present application. The scope of the present application is defined by the appended claims.

## Claims

1. An electrode plate, wherein the electrode plate comprises a current collector, an active layer, and a tab (1) being formed of one single piece, a first function surface of the current collector comprises a first active layer region (2) and a first tab region (3), a second function surface of the current collector comprises a second active layer region (8) corresponding to the first active layer region (2) and a second tab region (6) corresponding to the first tab region (3), and the active layer is disposed in the first active layer region (2) and/or the second active layer region (8); and
the first tab region (3) is provided with N through holes (4) penetrating to the second tab region (6), the tab (1) passes through the through hole (4) to conduct the first function surface and the second function surface of the current collector, and a first section of the tab (1) is connected to the first tab region (3) to form a first connection region (5) and a second section of the tab (1) is connected to the second tab region (6) to form a second connection region (7), wherein N ≥ 1,
wherein the first connection region (5) is a position where the tab (1) and the first tab region (3) are fixed, and the second connection region (7) is a position where the tab (1) and the second tab region (6) are fixed.

2. The electrode plate according to claim 1, wherein the tab (1) further comprises a third section, and the third section extends from a function surface of the current collector and is connected to an external tab.

3. The electrode plate according to claim 1 or 2, wherein in a width direction of the current collector, a minimum distance between edges of M through holes (4) and an edge of the current collector is W1, wherein W1 ≥ 1 mm, and M ≤ N.

4. The electrode plate according to claim 3, wherein in the width direction of the current collector, a ratio of the minimum distance W1 between the edges of the M through holes (4) and the edge of the current collector to a width W0 of the first tab region (3) and/or the second tab region (6) is (0.2-0.8): 1.

5. The electrode plate according to claim 4, wherein W0 ranges from 10 mm to 100 mm.

6. The electrode plate according to any one of claims 1 to 5, wherein in a length direction of the current collector, a minimum distance between edges of M through holes (4) and an edge of the first active layer region (2) and/or the second active layer region (8) is L1, wherein L1 ≥ 2 mm.

7. The electrode plate according to any one of claims 1 to 6, wherein a width of the first tab region (3) and/or the second tab region (6) is W0, and in a width direction of the current collector, a width of the first connection region (5) and/or the second connection region (7) ranges from 1 mm to ((W0/2)-2) mm.

8. The electrode plate according to any one of claims 1 to 7, wherein in a width direction of the current collector, a minimum distance between an edge of the first connection region (5) and/or the second connection region (7) and edges of M through holes (4) is greater than or equal to 1 mm; and/or
in a width direction of the current collector, a minimum distance between an edge of the first connection region (5) and/or the second connection region (7) and an edge of the current collector is greater than or equal to 1 mm.

9. The electrode plate according to any one of claims 1 to 8, wherein a protective layer (9) is disposed on the first function surface and/or the second function surface, the protective layer (9) covers each of W through holes (4), and the protective layer (9) has openings at corresponding positions of the W through holes (4), wherein W < N.

10. The electrode plate according to claim 9, wherein a thickness of the protective layer (9) ranges from 0.5 µm to 50 µm.

11. The electrode plate according to claim 9 or 10, wherein an area of the protective layer (9) is 1.2-5 times an area of the W through holes (4).

12. The electrode plate according to any one of claims 1 to 11, wherein the current collector comprises a first conductive layer, an insulation layer, and a second conductive layer that are stacked; and
the first function surface is a surface, away from the insulation layer, of the first conductive layer, and the second function surface is a surface, away from the insulation layer, of the second conductive layer.

13. The electrode plate according to claim 12, wherein the current collector further comprises a transition layer disposed between the first conductive layer and the insulation layer and/or between the second conductive layer and the insulation layer.

14. The electrode plate according to any one of claims 1 to 13, wherein the first tab region (3) is disposed on a side in a length direction of the first active layer region (2); or,
the first tab region (3) is disposed on a side in a width direction of the first active layer region (2), and three sides of the first tab region (3) are adjacent to the first active layer region (2); or,
the first tab region (3) is disposed on a side in a width direction of the first active layer region (2), and one side of the first tab region (3) is adjacent to the first active layer region (2).

15. An electrochemical apparatus, **characterized in that**, comprising the electrode plate according to any one of claims 1 to 14.

## Patentansprüche

1. Eine Elektrodenplatte, wobei die Elektrodenplatte einen Stromabnehmer, eine Aktivschicht und eine Lasche (1), die aus einem einzigen Stück gebildet ist, beinhaltet, eine erste Funktionsoberfläche des Stromabnehmers einen ersten Aktivschichtbereich (2) und einen ersten Laschenbereich (3) beinhaltet, eine zweite Funktionsoberfläche des Stromabnehmers einen zweiten Aktivschichtbereich (8), der dem ersten Aktivschichtbereich (2) entspricht, und einen zweiten Laschenbereich (6), der dem ersten Laschenbereich (3) entspricht, beinhaltet und die Aktivschicht in dem ersten Aktivschichtbereich (2) und/oder dem zweiten Aktivschichtbereich (8) angeordnet ist; und
der erste Laschenbereich (3) mit N Durchgangslöchern (4) versehen ist, die zu dem zweiten Laschenbereich (6) durchgehen, die Lasche (1) durch das Durchgangsloch (4) verläuft, um die erste Funktionsoberfläche und die zweite Funktionsoberfläche des Stromabnehmers zu leiten, und ein erster Abschnitt der Lasche (1) mit dem ersten Laschenbereich (3) verbunden ist, um einen ersten Verbindungsbereich (5) zu bilden, und ein zweiter Abschnitt der Lasche (1) mit dem zweiten Laschenbereich (6) verbunden ist, um einen zweiten Verbindungsbereich (7) zu bilden, wobei N ≥ 1,
wobei der erste Verbindungsbereich (5) eine Position ist, an der die Lasche (1) und der erste Laschenbereich (3) fixiert sind, und der zweite Verbindungsbereich (7) eine Position ist, an der die Lasche (1) und der zweite Laschenbereich (6) fixiert sind.

2. Elektrodenplatte gemäß Anspruch 1, wobei die Lasche (1) ferner einen dritten Abschnitt beinhaltet und sich der dritte Abschnitt von einer Funktionsoberfläche des Stromabnehmers erstreckt und mit einer externen Lasche verbunden ist.

3. Elektrodenplatte gemäß Anspruch 1 oder 2, wobei in einer Breitenrichtung des Stromabnehmers ein minimaler Abstand zwischen Kanten von M Durchgangslöchern (4) und einer Kante des Stromabnehmers W1 ist, wobei W1 ≥ 1 mm und M ≤ N.

4. Elektrodenplatte gemäß Anspruch 3, wobei in der Breitenrichtung des Stromabnehmers ein Verhältnis des minimalen Abstands W1 zwischen den Kanten der M Durchgangslöcher (4) und der Kante des Stromabnehmers zu einer Breite W0 des ersten Laschenbereichs (3) und/oder des zweiten Laschenbereichs (6) (0,2 - 0,8) : 1 ist.

5. Elektrodenplatte gemäß Anspruch 4, wobei W0 von 10 mm bis 100 mm reicht.

6. Elektrodenplatte gemäß einem der Ansprüche 1 bis 5, wobei in einer Längenrichtung des Stromabnehmers ein minimaler Abstand zwischen Kanten von M Durchgangslöchern (4) und einer Kante des ersten Aktivschichtbereichs (2) und/oder des zweiten Aktivschichtbereichs (8) L1 ist, wobei L1 ≥ 2 mm.

7. Elektrodenplatte gemäß einem der Ansprüche 1 bis 6, wobei eine Breite des ersten Laschenbereichs (3) und/oder des zweiten Laschenbereichs (6) W0 ist und in einer Breitenrichtung des Stromabnehmers eine Breite des ersten Verbindungsbereichs (5) und/oder des zweiten Verbindungsbereichs (7) von 1 mm bis ((W0/2) - 2) mm reicht.

8. Elektrodenplatte gemäß einem der Ansprüche 1 bis 7, wobei in einer Breitenrichtung des Stromabnehmers ein minimaler Abstand zwischen einer Kante des ersten Verbindungsbereichs (5) und/oder des zweiten Verbindungsbereichs (7) und Kanten von M Durchgangslöchern (4) größer als oder gleich 1 mm ist; und/oder in einer Breitenrichtung des Stromabnehmers ein minimaler Abstand zwischen einer Kante des ersten Verbindungsbereichs (5) und/oder des zweiten Verbindungsbereichs (7) und einer Kante des Stromabnehmers größer als oder gleich 1 mm ist.

9. Elektrodenplatte gemäß einem der Ansprüche 1 bis 8, wobei auf der ersten Funktionsoberfläche und/oder der zweiten Funktionsoberfläche eine Schutzschicht (9) angeordnet ist, die Schutzschicht (9) jedes von W Durchgangslöchern (4) bedeckt und die Schutzschicht (9) an entsprechenden Positionen der W Durchgangslöcher (4) Öffnungen aufweist, wobei W ≤ N.

10. Elektrodenplatte gemäß Anspruch 9, wobei eine Dicke der Schutzschicht (9) von 0,5 µm bis 50 µm reicht.

11. Elektrodenplatte gemäß Anspruch 9 oder 10, wobei eine Fläche der Schutzschicht (9) das 1,2- bis 5-Fache einer Fläche der W Durchgangslöcher (4) ist.

12. Elektrodenplatte gemäß einem der Ansprüche 1 bis 11, wobei der Stromabnehmer eine erste leitfähige Schicht, eine Isolierschicht und eine zweite leitfähige Schicht, die gestapelt sind, beinhaltet; und
die erste Funktionsoberfläche eine von der Isolierschicht ferne Oberfläche der ersten leitfähigen Schicht ist und die zweite Funktionsoberfläche eine von der Isolierschicht ferne Oberfläche der zweiten leitfähigen Schicht ist.

13. Elektrodenplatte gemäß Anspruch 12, wobei der Stromabnehmer ferner eine Übergangsschicht beinhaltet, die zwischen der ersten leitfähigen Schicht und der Isolierschicht und/oder zwischen der zweiten leitfähigen Schicht und der Isolierschicht angeordnet ist.

14. Elektrodenplatte gemäß einem der Ansprüche 1 bis 13, wobei der erste Laschenbereich (3) auf einer Seite in einer Längenrichtung des ersten Aktivschichtbereichs (2) angeordnet ist; oder
der erste Laschenbereich (3) auf einer Seite in einer Breitenrichtung des ersten Aktivschichtbereichs (2) angeordnet ist und drei Seiten des ersten Laschenbereichs (3) an den ersten Aktivschichtbereich (2) angrenzen; oder
der erste Laschenbereich (3) auf einer Seite in einer Breitenrichtung des ersten Aktivschichtbereichs (2) angeordnet ist und eine Seite des ersten Laschenbereichs (3) an den ersten Aktivschichtbereich (2) angrenzt.

15. Eine elektrochemische Vorrichtung, **dadurch gekennzeichnet, dass** sie die Elektrodenplatte gemäß einem der Ansprüche 1 bis 14 beinhaltet.

## Revendications

1. Une électrode plane, l'électrode plane comprenant un collecteur de courant, une couche active, et une languette (1) qui est formée d'une seule pièce, une première surface fonctionnelle du collecteur de courant comprenant une première zone de couche active (2) et une première zone de languette (3), une deuxième surface fonctionnelle du collecteur de courant comprenant une deuxième zone de couche active (8) correspondant à la première zone de couche active (2) et une deuxième zone de languette (6) correspondant à la première zone de languette (3), et la couche active étant disposée dans la première zone de couche active (2) et/ou la deuxième zone de couche active (8) ; et
la première zone de languette (3) étant pourvue de N trous traversants (4) pénétrant jusqu'à la deuxième zone de languette (6), la languette (1) passant à travers le trou traversant (4) pour conduire la première surface fonctionnelle et la deuxième surface fonctionnelle du collecteur de courant, et une première section de la languette (1) étant connectée à la première zone de languette (3) pour former une première zone de connexion (5) et une deuxième section de la languette (1) étant connectée à la deuxième zone de languette (6) pour former une deuxième zone de connexion (7), dans laquelle N ≥ 1,
dans laquelle la première zone de connexion (5) est une position où la languette (1) et la première zone de languette (3) sont fixes, et la deuxième zone de connexion (7) est une position où la languette (1) et la deuxième zone de languette (6) sont fixes.

2. L'électrode plane selon la revendication 1, dans laquelle la languette (1) comprend en outre une troisième section, et la troisième section s'étend à partir d'une surface fonctionnelle du collecteur de courant et est connectée à une languette externe.

3. L'électrode plane selon la revendication 1 ou la revendication 2, dans laquelle dans un sens de la largeur du collecteur de courant, une distance minimale entre des bords de M trous traversants (4) et un bord du collecteur de courant est W1, dans laquelle W1 ≥ 1 mm, et M ≤ N.

4. L'électrode plane selon la revendication 3, dans laquelle dans le sens de la largeur du collecteur de courant, un rapport de la distance minimale W1 entre les bords des M trous traversants (4) et le bord du collecteur de courant à une largeur W0 de la première zone de languette (3) et/ou de la deuxième zone de languette (6) est (0,2 à 0,8):1.

5. L'électrode plane selon la revendication 4, dans laquelle W0 est comprise dans l'intervalle de 10 mm à 100 mm.

6. L'électrode plane selon l'une quelconque des revendications 1 à 5, dans laquelle dans un sens de la longueur du collecteur de courant, une distance minimale entre des bords de M trous traversants (4) et un bord de la première zone de couche active (2) et/ou de la deuxième zone de couche active (8) est L1, dans laquelle L1 ≥ 2 mm.

7. L'électrode plane selon l'une quelconque des revendications 1 à 6, dans laquelle une largeur de la première zone de languette (3) et/ou de la deuxième zone de languette (6) est W0, et dans un sens de la largeur du collecteur de courant, une largeur de la première zone de connexion (5) et/ou de la deuxième zone de connexion (7) est comprise dans l'intervalle de 1 mm à ((W0/2) à 2) mm.

8. L'électrode plane selon l'une quelconque des revendications 1 à 7, dans laquelle dans un sens de la largeur du collecteur de courant, une distance minimale entre un bord de la première zone de connexion (5) et/ou de la deuxième zone de connexion (7) et des bords de M trous traversants (4) est supérieure ou égale à 1 mm ; et/ou dans un sens de la largeur du collecteur de courant, une distance minimale entre un bord de la première zone de connexion (5) et/ou de la deuxième zone de connexion (7) et un bord du collecteur de courant est supérieure ou égale à 1 mm.

9. L'électrode plane selon l'une quelconque des revendications 1 à 8, dans laquelle une couche protectrice (9) est disposée sur la première surface fonctionnelle et/ou la deuxième surface fonctionnelle, la couche protectrice (9) couvre chacun des W trous traversants (4), et la couche protectrice (9) a des ouvertures au niveau de positions correspondantes des W trous traversants (4), dans laquelle W ≤ N.

10. L'électrode plane selon la revendication 9, dans laquelle une épaisseur de la couche protectrice (9) est comprise dans l'intervalle de 0,5 µm à 50 µm.

11. L'électrode plane selon la revendication 9 ou la revendication 10, dans laquelle une aire de la couche protectrice (9) fait 1,2 à 5 fois une aire des W trous traversants (4).

12. L'électrode plane selon l'une quelconque des revendications 1 à 11, dans laquelle le collecteur de courant comprend une première couche conductrice, une couche d'isolation, et une deuxième couche conductrice qui sont empilées ; et
la première surface fonctionnelle est une surface, éloignée de la couche d'isolation, de la première couche conductrice, et la deuxième surface fonctionnelle est une surface, éloignée de la couche d'isolation, de la deuxième couche conductrice.

13. L'électrode plane selon la revendication 12, dans laquelle le collecteur de courant comprend en outre une couche de transition disposée entre la première couche conductrice et la couche d'isolation et/ou entre la deuxième couche conductrice et la couche d'isolation.

14. L'électrode plane selon l'une quelconque des revendications 1 à 13, dans laquelle la première zone de languette (3) est disposée sur un côté dans un sens de la longueur de la première zone de couche active (2) ; ou,
la première zone de languette (3) est disposée sur un côté dans un sens de la largeur de la première zone de couche active (2), et trois côtés de la première zone de languette (3) sont adjacents à la première zone de couche active (2) ; ou,
la première zone de languette (3) est disposée sur un côté dans un sens de la largeur de la première zone de couche active (2), et un côté de la première zone de languette (3) est adjacent à la première zone de couche active (2).

15. Un appareil électrochimique, **caractérisé en ce qu'**il comprend l'électrode plane selon l'une quelconque des revendications 1 à 14.
